Europäisches Patentamt

European Patent Office

Office européen des brevets

(19)

(11) **EP 0 751 645 A1**

(12) **DEMANDE DE BREVET EUROPEEN**

(43) Date de publication:
02.01.1997 Bulletin 1997/01

(51) Int. Cl.$^6$: **H04L 7/02**, H04L 27/38

(21) Numéro de dépôt: 96201701.8

(22) Date de dépôt: 19.06.1996

(84) Etats contractants désignés:
**DE FR GB IT SE**

(30) Priorité: **28.06.1995 FR 9507786**

(71) Demandeurs:
• **PHILIPS COMMUNICATION D'ENTREPRISE**
**75013 Paris (FR)**
Etats contractants désignés:
**FR**

• **PHILIPS ELECTRONICS N.V.**
**5621 BA Eindhoven (NL)**
Etats contractants désignés:
**DE GB IT SE**

(72) Inventeur: **Moridi, Said**
**75008 Paris (FR)**

(74) Mandataire: **Chaffraix, Jean**
**Société Civile S.P.I.D.**
**156, Boulevard Haussmann**
**75008 Paris (FR)**

(54) **Récepteur doté d'un dispositif de récupération de rythme**

(57) Un tel système comporte un émetteur et un récepteur pour transmettre un signal modulé à partir d'une première constellation. Ledit récepteur, qui est destiné à recevoir des échantillons dudit signal et à prendre des décisions sur lesdits échantillons, est de plus doté d'un dispositif de récupération de rythme de type synchrone comprenant une boucle à verrouillage de phase asservie au moyen d'un erreur d'asservissement.

Conformément à l'invention, ladite erreur d'asservissement est formée à partir d'une pseudo-erreur fonction d'une première et d'une seconde erreur respectivement affectées d'une première et d'une seconde pondération, ladite première erreur étant fonction de la distance entre les échantillons reçus et les décisions prises sur ces échantillons dans ladite première constellation, ladite seconde erreur étant fonction de la distance entre lesdits échantillons et les décisions prises sur ces échantillons dans une seconde constellation simplifiée, et la pondération affectée à ladite seconde erreur étant proportionnelle à ladite première erreur.

Applications: système de communications numériques synchrones.

FIG. 2

EP 0 751 645 A1

## Description

L'invention concerne un système de communications numériques comportant au moins un émetteur et un récepteur pour transmettre un signal modulé à partir d'une première constellation, ledit récepteur qui est destiné à recevoir des échantillons dudit signal et à prendre des décisions sur lesdits échantillons étant de plus doté d'un dispositif de récupération de rythme de type synchrone comprenant une boucle à verrouillage de phase asservie au moyen d'une erreur d'asservissement.

L'invention concerne également un récepteur pour modulations numériques, destiné à recevoir des échantillons d'un signal modulé à partir d'une première constellation et à prendre des décisions sur lesdits échantillons, doté d'un dispositif de récupération de rythme de type synchrone comprenant une boucle à verrouillage de phase asservie au moyen d'une erreur d'asservissement.

L'invention a d'importantes applications dans le domaine des communications synchrones. Les horloges de l'émetteur et du récepteur doivent en effet être synchronisées de façon à optimiser les instants d'échantillonnage du signal reçu.

Soient $a(nT)$ les symboles émis par l'émetteur au rythme T, $x(nT+\tau)$ le signal échantillonné par le récepteur avec un décalage de $\tau$, et h la fonction de transfert globale du canal de transmission, la relation entre symboles émis et symboles reçus s'exprime de la façon suivante:

$$x(nT+\tau) = \sum_i a(iT)h[(n\text{-}i)T+\tau]$$

$$x(nT+\tau) = a(nT)h(\tau) + \sum_{i \neq n} a(iT)h[(n\text{-}i)T+\tau]$$

On voit donc apparaître en plus des données recherchées $a(nT)h(\tau)$ un terme d'interférence inter-symboles qui est fonction du décalage $\tau$. L'erreur qui en résulte sur l'échantillon reçu va être exploité pour corriger le décalage $\tau$.

Pour cela, l'article "Timing recovery in digital synchronous data receivers" publié en mai 1976 dans la revue IEEE TRANSACTIONS ON COMMUNICATIONS, volume 24, numéro 5, par Mueller et Müller préconise d'asservir la boucle à verrouillage de phase au moyen d'une fonction f dérivée de la réponse h du canal et qui la symétrise à l'équilibre c'est-à-dire pour $\tau$ vérifiant $f(\tau)=O$. Dans la pratique on ne dispose pas de la réponse h du canal, et on utilise donc une estimation de cette fonction qui est quant à elle dérivée des échantillons reçus par le récepteur. L'estimation utilisée est par exemple donnée par l'expression suivante:

$$\varepsilon_n = Re[e_{n\text{-}1}^*(d_n - d_{n\text{-}2})]$$

où:

- Re() indique la partie réelle du nombre complexe entre parenthèses,
- $d_n$ est la décision prise sur le $n^{ème}$ échantillon reçu $x_n$,
- $e_n = x_n - d_n$ est l'erreur correspondante pour l'échantillon $x_n$,
- et $e_n^*$ est le conjugué de $e_n$.

Cette estimation conduit effectivement à symétriser la réponse du canal à l'équilibre puisqu'alors:

$$Re[h(T+\tau) - h(\text{-}T+\tau)] = O$$

Cette estimation $\varepsilon_n$ est fonction de l'erreur $e_{n\text{-}1}$ commise sur l'échantillon $x_{n\text{-}1}$. Son utilisation comme erreur d'asservissement de la boucle à verrouillage de phase du dispositif de récupération de rythme du récepteur pour des modulations à grand nombre d'états donne des résultats insuffisants. En effet, la distance entre deux points de la constellation utilisée diminuant lorsque le nombre d'états de la constellation augmente, la probabilité d'avoir une décision fausse et donc un calcul d'erreur faux augmente.

L'invention a pour but de remédier à cet inconvénient.

Pour cela, un système de communication selon l'invention et tel que décrit dans le paragraphe introductif est caractérisé en ce que ladite erreur d' asservissement est formée à partir d'une pseudo-erreur qui est fonction d'une première et d'une seconde erreur respectivement affectées d'une première et d'une seconde pondération, ladite première erreur étant fonction de la distance entre les échantillons reçus et les décisions prises sur ces échantillons dans ladite première constellation, ladite seconde erreur étant fonction de la distance entre lesdits échantillons et les décisions prises sur ces échantillons dans une seconde constellation simplifiée, et la pondération affectée à ladite seconde erreur étant proportionnelle à ladite première erreur .

Ainsi, ladite première erreur est prépondérante tant qu'elle reste inférieure à une certaine valeur, c'est-à-dire tant qu'elle peut être considérée comme fiable. Au delà, c'est la seconde erreur, plus grossière, qui est prépondérante, assurant ainsi une plus grande robustesse au dispositif de récupération de rythme. En effet, plus l'amplitude de la correction apportée à l'échantillonneur est importante, et plus rapide sera la convergence vers l'instant d'échantillonnage recherché. Il est donc avantageux d'utiliser une correction de plus forte amplitude lorsque l'erreur dépasse une certaine valeur.

Dans un mode de réalisation particulièrement simple à mettre en oeuvre, ladite pseudo-erreur est formée à partir:

- de ladite première erreur, lorsque ladite première erreur est inférieure à un seuil prédéterminé,
- et de ladite seconde erreur sinon.

Dans un autre mode de réalisation d'un système de communication selon l'invention, le récepteur comporte:

- des moyens de comparaison des coordonnées des échantillons reçus avec les frontières de la première constellation,
- des moyens de détection de synchronisation,
- des moyens de mémorisation des coordonnées de ladite erreur d'asservissement,
- des moyens de calcul de ladite erreur d'asservissement à partir des coordonnées mémorisées,
- des moyens de contrôle desdits moyens de mémorisation pour ne mémoriser une coordonnée de ladite erreur d'asservissement que si la coordonnée correspondante de l'échantillon reçu se situe hors des frontières de la première constellation, lorsque ledit récepteur n'est pas synchronisé.

Dans un premier mode de fonctionnement, utilisé lorsque le récepteur n'est pas synchronisé, seules sont utilisées les coordonnées des points pour lesquels le signe de l'erreur est certain. Ce mode de fonctionnement est donc particulièrement robuste et permet "d'accrocher" rapidement le rythme de l'émetteur lors du démarrage. Il est en revanche très bruité puisqu'il utilise peu de points, et il est donc nécessaire de commuter dans un second mode de fonctionnement qui utilise tous les points reçus dès que le récepteur est synchronisé sur l'émetteur.

D'autres détails particularités et avantages de la présente invention apparaîtront dans la description qui va suivre en regard des dessins annexés qui sont donnés à titre d'exemple non limitatifs et dans lesquels:

- la figure 1 représente un système de communication selon l'invention,
- la figure 2 représente schématiquement un récepteur d'un tel système de communication,
- les figures 3 et 4 sont des schéma d'une première constellation de 16 points et d'une seconde constellation simplifiée de 4 points,
- la figure 5 représente une courbe comparant les résultats obtenus selon l'état antérieur de la technique et selon les différents modes de réalisation de la présente invention avec une constellation MAQ 128,
- la figure 6 est un schéma synoptique d'un comparateur de phase d'un système selon l'invention.

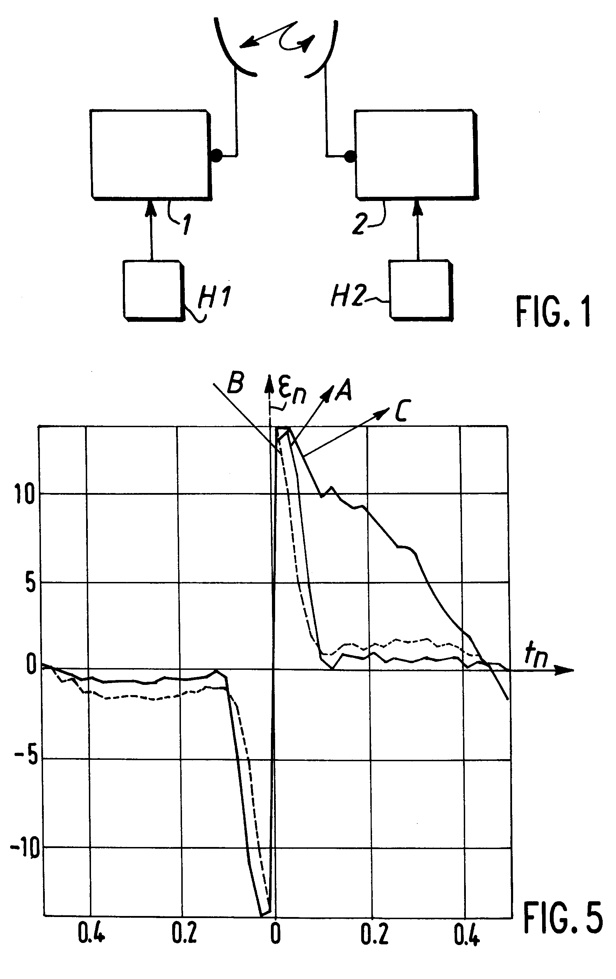

D'après la figure 1, un système de communication selon l'invention comporte un émetteur 1 travaillant au rythme d'une première horloge H1 et un récepteur 2 qui travaille au rythme d'une seconde horloge H2 pour transmettre un signal par voie hertzienne par exemple.

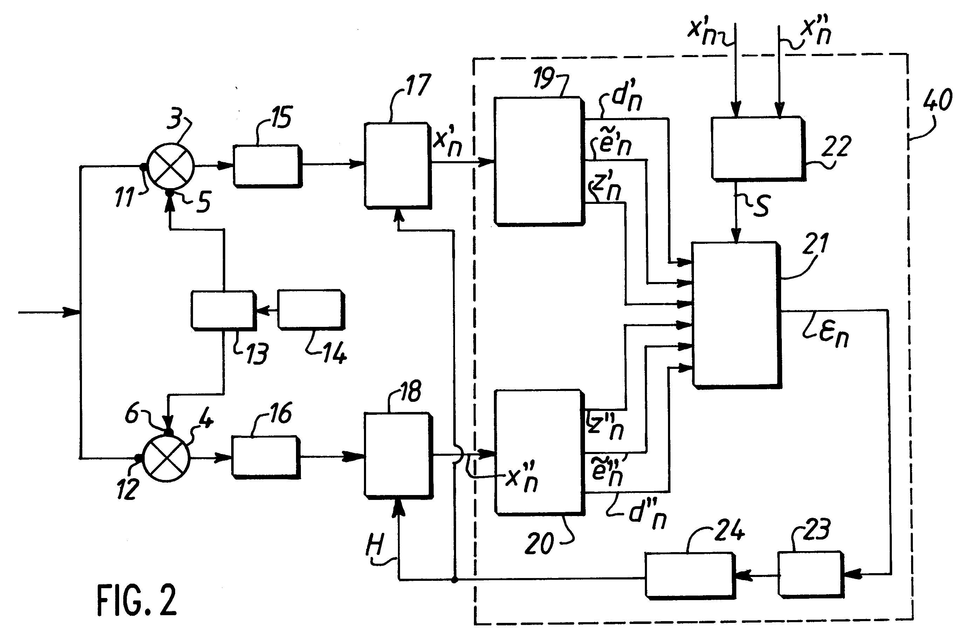

D'après la figure 2, le récepteur 2 comporte deux mélangeurs 3 et 4. Ces mélangeurs reçoivent d'une part sur leur première entrée 11 et 12 le signal reçu par le récepteur 2, et d'autre part sur leur seconde entrée 5 et 6 des signaux en quadrature issus d'un déphaseur 13 de 90° qui reçoit lui-même un signal sinusoïdal d'un oscillateur local 14. Les sorties des mélangeurs 3 et 4 sont reliées à l'entrée d'un filtre passe-bas 15 et 16 respectivement. Et les sorties de ces filtres 15 et 16 sont reliées aux entrées de convertisseurs analogique-numériques 17 et 18 respectivement. Ces convertisseurs analogique-numériques sont pilotés par un signal d'horloge H qui leur est fourni par le dispositif de récupération de rythme 40. Le convertisseur 17 fournit ainsi la composante réelle $x'_n$ de l'échantillon $x_n$ à un premier dispositif de calcul d'erreur 19. Et le convertisseur 18 fournit la composante imaginaire $x''_n$ de l'échantillon $x_n$ à un second dispositif de calcul d'erreur 20. Des données $d'_n$, $\tilde{e}'_n$, $z'_n$ d'une part et $d''_n$, $\tilde{e}''_n$ et $z''_n$ d'autre part délivrées en sortie des dispositifs de calcul d'erreur 19 et 20 sont fournies à un comparateur de phase 21 qui reçoit par ailleurs une donnée S issue d'un détecteur de synchronisation 22. Ce comparateur de phase élabore une erreur d'asservissement $\varepsilon_n$ qui est appliquée à un filtre de boucle 23 qui commande un oscillateur contrôlé en tension 24 dont la sortie pilote les convertisseurs analogique-numériques 17 et 18.

Ainsi la boucle à verrouillage de phase PLL constituée par les convertisseurs analogique-numériques 17 et 18, les dispositifs de calcul d'erreur 19 et 20, le comparateur de phase 21, le filtre de boucle 23 et l'oscillateur contrôlé en tension 24 est asservie au moyen de l'erreur d'asservissement $\varepsilon_n$ pour corriger le décalage $\tau$ entre les horloges de l'émetteur 1 et du récepteur 2.

L'erreur d'asservissement $\varepsilon_n$ utilisée s'exprime de la façon suivante:

$$\varepsilon_n = Re[\tilde{e}^{*}_{n-1}(d_n - d_{n-2})]$$

$$soit \ \varepsilon_n = \tilde{e}'_{n-1}(d'_n - d'_{n-2}) + \tilde{e}''_{n-1}(d''_n - d''_{n-2})$$

$$avec \ \tilde{e}_{n-1} = \tilde{e}'_{n-1} + j.\tilde{e}''_{n-1}$$

$$et \ d_n = d'_n + j.d''_n$$

où $\tilde{e}_n$ est une pseudo erreur qui dans un premier mode de réalisation est égale à:

$$\tilde{e}_n = k_1 e_n + k_2 |e_n| \hat{e}_n$$

k1 et k2 étant des réels positifs et $\hat{e}_n$ étant égal à:

$$\hat{e}_n = x_n - \alpha.sgn(x_n)$$

- sgn indique la fonction signe (en considérant que sgn($x_n$)=sgn($x'_n$)+j.sgn($x''_n$), $x'_n$ et $x''_n$ étant respectivement les parties réelle et imaginaire de $x_n$),
- et $\alpha$ est égal à:

$$a = \frac{E(|a_n|^2)}{E(|a'_n| + |a''_n|)}$$

E() indiquant l'espérance mathématique de l'expression entre parenthèses.

Cette pseudo-erreur est une somme pondérée d'une première erreur $e_n$ et d'une seconde erreur $\hat{e}_n$. La première erreur $e_n$ est l'erreur entre les échantillons reçus $x_n$ et les décisions $d_n$ prises sur ces échantillons $x_n$ dans la constellation à partir de laquelle le signal a été modulé. La seconde erreur $\hat{e}_n$ est l'erreur entre les échantillons $x_n$ et les décisions prises sur ces échantillons dans une seconde constellation simplifiée par rapport à la précédente. Le poids attribué à la seconde erreur $\hat{e}_n$ est proportionnel à la première erreur $e_n$.

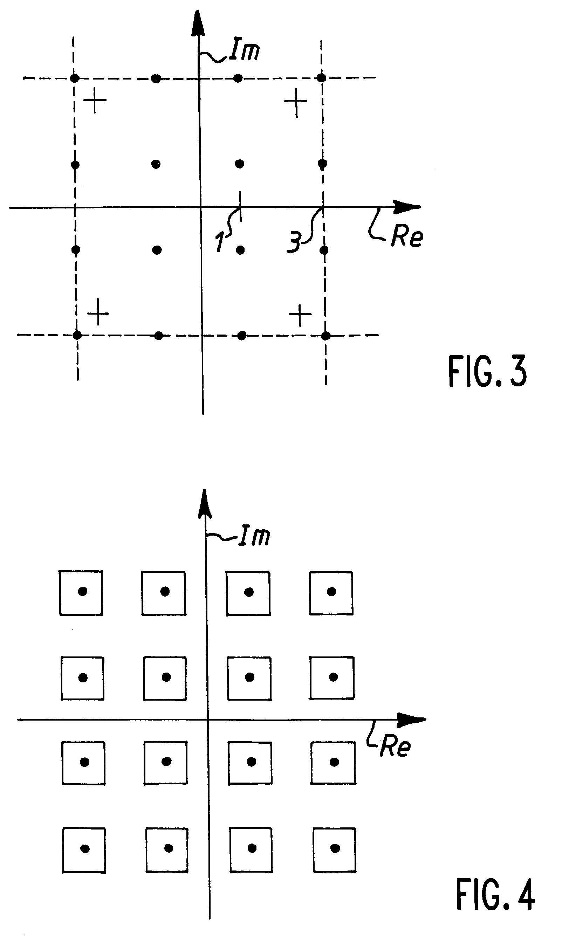

La figure 3 donne une représentation de ces constellations. Dans cet exemple choisi pour la simplicité de la représentation, la constellation utilisée pour moduler le signal, dite première constellation, est une constellation MAQ 16. La constellation simplifiée, dont le choix est indépendant de celui de la première constellation, est une constellation de quatre points de coordonnées ($\alpha$, $\alpha$), ($\alpha$, -$\alpha$), (-$\alpha$, $\alpha$) et (-$\alpha$, -$\alpha$) puisque, $x_n$ étant une erreur d'asservissement complexe, sgn($x_n$) peut prendre quatre valeurs différentes: 1+j, 1-j, -1+j, et -1-j. Lorsque la première constellation est une constellation MAQ16, la valeur de $\alpha$ est égale à 2,5.

Ainsi, l'erreur $e_n$ est utilisée de façon prépondérante tant qu'elle peut être considérée comme fiable. Au delà, c'est l'erreur $\hat{e}_n$, plus grossière, qui est prépondérante.

Le mode de réalisation qui vient d'être décrit concerne une constellation simplifiée de quatre points qui présente l'avantage d'être simple. Mais il est bien entendu que d'autres types de constellations simplifiées sont utilisables.

L'invention tire partie de l'article "Blind Equalizers" d'Albert Benveniste publié dans la revue IEEE Transactions on communications, volume 32, numéro 8, Août 1984, qui décrit une utilisation d'une telle pseudo-erreur. Elle y est toutefois utilisée pour une technique différente de celle de la présente invention: l'égalisation.

L'invention consiste en outre à améliorer cette méthode, notamment en réduisant le nombre d'opérations à effectuer.

Pour cela dans un autre mode de réalisation de l'invention la pseudo-erreur utilisée est définie de la façon suivante:

$$\tilde{e}_n = \begin{cases} sgn \ e_n & si \ [|e'_n| < 1/2 \ et \ |e''_n| < 1/2] \\ sgn \ \hat{e}_n & sinon \end{cases}$$

La figure 4 représente des carrés de côtés 1/2 centrés sur chaque point de la constellation MAQ 16. Lorsque l'échantillon $x_n$ se situe à l'intérieur de ce carré, les parties réelle et imaginaire $e'_n$ et $e''_n$ de l'erreur sont inférieures à 1/2 et $\tilde{e}_n$ est égal à sgn($e_n$). En revanche au delà de cette frontière $\tilde{e}_n$ est égal à sgn($\hat{e}_n$).

L'évaluation de la pseudo-erreur $\tilde{e}_n$ et donc de l'erreur d'asservissement $\varepsilon_n$ en sont ainsi simplifiées. En effet, les parties réelle et imaginaire de $\tilde{e}_{n-1}$ n'étant représentées que par un seul élément binaire, les multiplications qui étaient nécessaires sont supprimées.

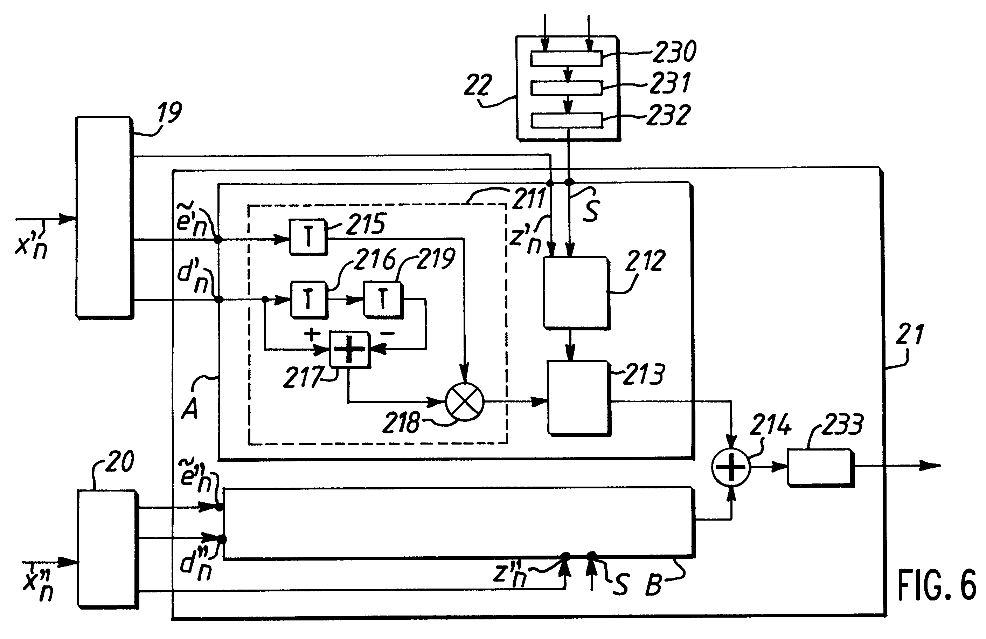

Cette modification améliore la caractéristique du comparateur de phase comme le prouve les courbes A et B de la figure 5. Ces courbes indiquent en abscisse le retard d'échantillonnage $t_n$ et en ordonnée la sortie du comparateur de phase, c'est-à-dire la valeur de l'erreur d'asservissement $\varepsilon_n$ correspondante. La courbe A correspond à l'état antérieur de la technique, et la courbe B correspond au second mode de réalisation de la présente invention. La correction apportée à l'horloge locale lorsque le retard est important est supérieure selon la courbe B ce qui permet d'obtenir une convergence plus rapide.

Le résultat obtenu peut toutefois ne pas être suffisant dans certains cas. Pour cela, dans un troisième mode de réalisation de l'invention, on distingue une première phase dite phase d'accrochage lors du démarrage pendant laquelle l'horloge du récepteur n'est pas encore synchronisée sur celle de l'émetteur. A cette première phase correspond un premier mode de fonctionnement. Puis, dès que le récepteur est synchronisé, on passe à un deuxième mode de fonctionnement qui correspond à l'un des modes de réalisation décrit précédemment. Dans le premier mode de fonctionnement, seules sont utilisées pour le calcul de l'erreur d'asservissement $\varepsilon_n$ les coordonnées des points reçus pour lesquelles l'erreur est certaine, c'est-à-dire celles qui se situent à l'extérieur de la constellation.

La figure 6 représente un schéma du comparateur de phase 21 dans ce mode de réalisation. Il se compose de deux sous-ensembles A et B identiques pour le traitement de la partie réelle et de la partie imaginaire du signal respectivement. Seul le sous-ensemble A correspondant au traitement de la partie réelle du signal est décrit en détail sur la figure. Il comporte un circuit 211 de calcul de la partie réelle de l'erreur d'asservissement $\varepsilon_n$, et un circuit 212 de contrôle d'une mémoire 213. Le comparateur de phase comporte par ailleurs un circuit 214 de sommation des résultats obtenus pour les parties réelles et imaginaires. Et la sortie de ce circuit de sommation est transmise à un convertisseur numérique-analogique 233 qui fournit l'erreur d'asservissement $\varepsilon_n$ résultante au filtre de boucle 23.

Le circuit de calcul 211 reçoit en entrée d'une part la partie réelle de la pseudo-erreur $\tilde{e}'_n$ qui est fournit à un premier retardateur 215, et d'autre part la partie réelle de la décision prise $d'_n$ qui est fournie à un second retardateur 216 d'une part et à un sommateur 217 d'autre part. Le premier retardateur 215 délivre en sortie la pseudo-erreur retardée $\tilde{e}'_{n-1}$ qui est fournie à un circuit multiplicateur 218. Le second retardateur 216 délivre la décision retardée $d'_{n-1}$ qui est fournie en entrée d'un troisième retardateur 219. Ce troisième retardateur fournit au circuit sommateur 217 la décision retardée $d'_{n-2}$. Le circuit sommateur 217 fournit au multiplicateur 218 la somme ($d'_n - d'_{n-2}$), et enfin le multiplicateur 218 fournit à la mémoire 213 la partie réelle de l'erreur d'asservissement $\varepsilon_n$:

$$Re(\varepsilon_n) = \tilde{e}'_{n-1}(d'_n - d'_{n-2})$$

La mémorisation de cette expression fournie en entrée de la mémoire 213 dépend de l'indication que lui fournit le circuit de contrôle 212. Ce circuit de contrôle 212 reçoit en entrée d'une part un indicateur de mémorisation $z'_n$ qui lui est fourni par le dispositif de calcul d'erreur 19 et d'autre part un indicateur de synchronisation S qui lui est fourni par le détecteur de synchronisation 22. Le circuit de contrôle 212 émet vers la mémoire 213 un signal de mémorisation lorsque le signal S indique une absence de synchronisation et lorsque le signal $z'_n$ indique que l'expression fournie par le circuit de calcul 211 doit être mémorisée, c'est-à-dire lorsque la partie réelle de l'échantillon reçu est supérieure à celles des points de la constellation en valeur absolue.

La mémoire 213 fournit la dernière valeur qu'elle a mémorisée au circuit de sommation 214 qui reçoit d'autre part la dernière valeur' mémorisée par la mémoire du sous-ensemble B.

Dans un exemple de réalisation décrit sur la figure 6, le détecteur de synchronisation 22 comporte un premier circuit 230 de calcul d'une valeur moyenne de l'erreur donnée par exemple par l'expression suivante:

$$\mu = \Sigma |e'_n| + |e''_n|$$

La sortie de ce circuit 230 de calcul est fournie en entrée d'un convertisseur numérique analogique 231 dont la sortie est reliée à l'entrée d'un filtre passe bas 232. Le résultat obtenu est fourni en entrée d'un comparateur 234. La sortie de ce comparateur constitue la donnée S fournie au circuit de contrôle 212.

Les résultats obtenus dans ce mode de réalisation sont donnés par la courbe C de la figure 5. La correction apportée à l'horloge locale est nettement supérieure à celle obtenue avec les courbes A et B.

Il va de soi que des variantes peuvent être apportées aux modes de réalisation qui viennent d'être décrits, notamment par substitution de moyens techniques équivalents sans que l'on sorte pour cela du cadre de la présente invention. En particulier les constellations utilisées peuvent être différentes de celles utilisées dans la description, et d'autres simplifications peuvent être apportées à l'expression de la pseudo-erreur.

**Revendications**

1. Système de communications numériques comportant au moins un émetteur (1) et un récepteur (2) pour transmettre un signal modulé à partir d'une première constellation, ledit récepteur qui est destiné à recevoir des échantillons ($x_n$) dudit signal et à prendre des décisions ($d_n$) sur lesdits échantillons étant de plus doté d'un dispositif (40) de récupération de rythme de type synchrone comprenant une boucle à verrouillage de phase (17, 18, 19, 20, 21, 23, 24) asservie au moyen d'une erreur d'asservissement ($\varepsilon_n$),

caractérisé en ce que ladite erreur d'asservissement est formée à partir d'une pseudo-erreur ($\tilde{e}_n$) qui est fonction d'une première ($e_n$) et d'une seconde erreur ($\hat{e}_n$) respectivement affectées d'une première et d'une seconde pondération, ladite première erreur étant fonction de la distance entre les échantillons reçus et les décisions prises sur ces échantillons dans ladite première constellation, ladite seconde erreur étant fonction de la distance entre lesdits échantillons et les décisions prises sur ces échantillons dans une seconde constellation simplifiée, et la pondération affectée à ladite seconde erreur étant proportionnelle à ladite première erreur.

2. Système de communications numériques selon la revendication 1, caractérisé en ce que ladite pseudo-erreur est fonction:

- de ladite première erreur, lorsque ladite première erreur est inférieure à un seuil prédéterminé,
- et de ladite seconde erreur sinon.

3. Système de communication selon la revendication 2, caractérisé en ce que ladite pseudo-erreur est égale:

- au signe de ladite première erreur lorsque ladite première erreur est inférieure à un seuil prédéterminé,
- et au signe de ladite seconde erreur sinon.

4. Système de communication selon l'une des revendications 1 à 3, caractérisé en ce que le récepteur comporte:

- des moyens de comparaison (220) des coordonnées des échantillons reçus avec les frontières de la première constellation,
- des moyens de détection de synchronisation (22),
- des moyens de mémorisation (213) des coordonnées de ladite erreur d'asservissement,
- des moyens de calcul (214) de ladite erreur d'asservissement à partir des coordonnées mémorisées,
- des moyens de contrôle (212) desdits moyens de mémorisation (213) pour ne mémoriser une coordonnée de ladite erreur d'asservissement que si la coordonnée correspondante de l'échantillon reçu se situe hors des frontières de la première constellation, lorsque ledit récepteur n'est pas synchronisé.

5. Récepteur (2) pour modulations numériques, destiné à recevoir des échantillons ($x_n$) d'un signal modulé à partir d'une première constellation et à prendre des décisions ($d_n$) sur lesdits échantillons, doté d'un dispositif de récupération (40) de rythme de type synchrone comprenant une boucle à verrouillage de phase (17, 18, 19, 20, 21, 23, 24) asservie au moyen d'une erreur d'asservissement ($\varepsilon_n$),

caractérisé en ce que ladite erreur d'asservissement est formée à partir d'une pseudo-erreur ($\tilde{e}_n$) qui est fonction d'une première ($e_n$) et d'une seconde ($\hat{e}_n$) erreur respectivement affectées d'une première et d'une seconde pondération, ladite première erreur étant fonction de la distance entre les échantillons reçus et les décisions prises sur ces échantillons dans ladite première constellation, ladite seconde erreur étant fonction de la distance entre lesdits échantillons et les décisions prises sur ces échantillons dans une seconde constellation simplifiée, et la pondération affectée à ladite seconde erreur étant proportionnelle à ladite première erreur.

6. Récepteur pour modulations numériques selon la revendication 5, caractérisé en ce que ladite pseudo-erreur est formée à partir:

- de ladite première erreur, lorsque ladite première erreur est inférieure à un seuil prédéterminé,
- et de ladite seconde erreur sinon.

7. Récepteur selon la revendication 6, caractérisé en ce que ladite pseudo-erreur est égale:

- au signe de ladite première erreur lorsque ladite première erreur est inférieure à un seuil prédéterminé,
- et au signe de ladite seconde erreur sinon.

8. Récepteur selon la revendication 7, caractérisé en ce que le récepteur comporte:

- des moyens de comparaison (220) des coordonnées des échantillons reçus avec les frontières de la première constellation,

- des moyens de détection de synchronisation (22),
- des moyens de mémorisation (213) des coordonnées de ladite erreur d'asservissement,
- des moyens de calcul (214) de ladite erreur d'asservissement à partir des coordonnées mémorisées,
- des moyens de contrôle (212) desdits moyens de mémorisation (213) pour ne mémoriser une coordonnée de ladite erreur d'asservissement que si la coordonnée correspondante de l'échantillon reçu se situe hors des frontières de la première constellation, lorsque ledit récepteur n'est pas synchronisé.

9. Dispositif de récupération de rythme (40) destiné à être utilisé dans un récepteur selon l'une des revendications 5 à 8.

FIG. 1

FIG. 5

FIG.2

FIG. 3

FIG. 4

FIG. 6

**EP 0 751 645 A1**

**Office européen des brevets**

**RAPPORT DE RECHERCHE EUROPEENNE**

Numero de la demande

EP 96 20 1701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 249 931 (FUJITSU LTD) 23 Décembre 1987<br>* page 1, ligne 2 - ligne 6 *<br>* page 3, ligne 9 - ligne 19 *<br>* page 6, ligne 10 - page 8, ligne 20 *<br>* figures 1-5 *<br>--- | 1-3,5-7, 9 | H04L7/02<br>H04L27/38 |
| A | IEEE TRANSACTIONS ON COMMUNICATIONS,<br>vol. 38, no. 9, 1 Septembre 1990,<br>pages 1495-1503, XP000173218<br>JENNINGS A ET AL: "A BAUD-RATE<br>FULL-DUPLEX TRANSMISSION UNIT FOR<br>SUBSCRIBER LOOPS"<br>* page 1497, colonne de gauche, ligne 18 -<br>page 1498, colonne de gauche, ligne 5;<br>figures 4-6,8 *<br>--- | 1-3,5-7, 9 | |
| A | US-A-4 759 036 (MEYERS MARTIN H) 19<br>Juillet 1988<br>* abrégé *<br>* colonne 7, ligne 45 - colonne 8, ligne<br>17; figures 1,2,4,5 *<br>--- | 1-9 | |
| A | ICC '93 GENEVA. IEEE INTERNATIONAL<br>CONFERENCE ON COMMUNICATIONS '93.<br>TECHNICAL PROGRAM, CONFERENCE RECORD (CAT.<br>NO.93CH3261-5), PROCEEDINGS OF ICC '93 -<br>IEEE INTERNATIONAL CONFERENCE ON<br>COMMUNICATIONS, GENEVA, SWITZERLAND, 23-26<br>MAY 1993, ISBN 0-7803-0950-2, 1993, NEW<br>YORK, NY, USA, IEEE, USA,<br>pages 1804-1808 vol.3, XP000448433<br>DANESHRAD B ET AL: "A carrier and timing<br>recovery technique for QAM transmission on<br>digital subscriber loops"<br>* page 1806, colonne de gauche, alinéa 2 -<br>page 1807, colonne de droite, alinéa 2;<br>figures 7-9 *<br>---<br>-/-- | 1,5,9 | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 10 Octobre 1996 | Pieper, T |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
....................................................
& : membre de la même famille, document correspondant

EPO FORM 1503 03.82 (P04C02)

Office européen
des brevets

**RAPPORT DE RECHERCHE EUROPEENNE**

Numero de la demande

EP 96 20 1701

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | IEEE TRANSACTIONS ON COMMUNICATIONS, AUG. 1984, USA, vol. COM-32, no. 8, ISSN 0090-6778, pages 871-883, XP000577279 BENVENISTE A ET AL: "Blind equalizers" * page 875, colonne de gauche, alinéa 3 - page 876, colonne de gauche, alinéa 1; figures 7,8 * | 1,5 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 10 Octobre 1996 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)